# FASCICULE DE BREVET EUROPEEN

(11) **EP 3 853 464 B1**
(45) Date de publication et mention de la délivrance du brevet: **31.07.2024**
(21) Numéro de dépôt: 19791321.3
(22) Date de dépôt: 20.09.2019
(51) Int. Cl.: F02K 1/82, F02C 7/045, F02C 7/24

(54) **PROCÉDÉ DE PRÉPARATION D'UN SUPPORT ET DE GESTION ACOUSTIQUE, SUR UNE TURBOMACHINE OU UNE NACELLE**
VERFAHREN ZUR HERSTELLUNG EINES TRÄGERS UND ZUR AKUSTISCHEN VERWALTUNG AUF EINEM TURBINENTRIEBWERK ODER EINER GONDEL
METHOD FOR PREPARING A SUPPORT AND FOR ACOUSTIC MANAGEMENT ON A TURBINE ENGINE OR A NACELLE

(30) Priorité: 20.09.2018 FR 1858549
(43) Date de publication de la demande: 28.07.2021
(73) Titulaire: SAFRAN AIRCRAFT ENGINES, 75015 Paris (FR)
(72) Inventeur: JODET, Norman, Bruno, André, 77550 Moissy-Cramayel (FR); BOITEUX, Jean-Michel, 77550 Moissy-Cramayel (FR); COUILLARD, Francis, 77550 Moissy-Cramayel (FR); GONZALEZ, Jérémy, Paul, Francisco, 77550 Moissy-Cramayel (FR); ORCEL, Stéphane, 77550 Moissy-Cramayel (FR)
(74) Mandataire: Ernest Gutmann - Yves Plasseraud S.A.S.
(86) Numéro de dépôt international: PCT/FR2019/052208
(87) Numéro de publication internationale: WO 2020/058650

(56) Documents cités:
- EP-A1- 3 372 805
- FR-A1- 2 989 814
- FR-A1- 3 039 517
- GB-A- 2 429 043
- US-A1- 2014 321 999

## Description

### CONTEXTE / RESUME DE L'INVENTION

La présente invention concerne l'optimisation d'un compromis acoustique sur les moteurs d'aéronefs.

La mise en oeuvre de panneaux acoustiques dans les turbomachines d'aéronefs, en particulier les moteurs d'avion est, en partie, justifiée par des contraintes associées aux politiques de limitation de vol aux aéroports. Ces contraintes s'expriment notamment en termes de charges de bruit (charges financières appliquées aux compagnies aériennes à chaque utilisation d'un aéroport). Ces charges de bruit sont à la discrétion de chaque aéroport, qui détermine, en concertation avec les utilisateurs, la structure de charge à appliquer localement.

On comprend dès lors que les technologies de réduction de bruit peuvent présenter plus ou moins d'intérêt. C'est pourquoi il est intéressant d'optimiser le niveau de bruit des turbomachines en tenant compte des objectifs des utilisateurs. Cette optimisation du compromis acoustique peut être répercutée pour renforcer d'autres fonctionnalités de la turbomachine (plus performante ou plus efficace vs. l'environnement). Par ailleurs, on remarque que les niveaux d'atténuations obtenues par certains panneaux acoustiques ne sont pas toujours perceptibles par l'oreille humaine, même s'ils sont nettement démontrés par la mesure.

EP3372805, US 2014/321999, FR 2989814, FR 3039517 divulguent un procédé de préparation d'une zone d'un support et de gestion acoustique et un ensemble de gestion acoustique conforme au préambule de la revendication 1.

II est toutefois ici proposé d'optimiser la capacité à adapter le niveau de technologie de réduction de bruit d'un produit (panneaux acoustiques) en fonction du besoin des utilisateurs. Il est, par ailleurs, cherché à adapter

les charges de bruit et à favoriser la polyvalence des solutions et donc à adapter au mieux les compromis entre les impératifs acoustiques et aérodynamiques.

Dans ce contexte, une autre difficulté technique suivante a en outre été identifiée : comment minimiser la pénalité aérodynamique engendrée par la profondeur du décrochement ? Bien que la mise en oeuvre d'un dit support de la turbomachine ou de la nacelle doté d'un emplacement à lignes « continues » (sans d'angles marqués, du moins en extrémité amont et aval, dans le sens de circulation dudit air en mouvement) associée à la conception d'un panneau de forme adaptée permette d'améliorer la situation, on pourra préférer une solution de joints amovibles permettant de maximiser l'efficacité desdits panneaux optionnels.

A titre de solution, il est plus précisément proposé, aux fins précitées, que dans les cas a), b) ou c) du procédé objet du préambule de la revendication 1 :
- soit, dans le cas a) ou c), on dispose dans le décrochement des éléments amovibles de lissage aérodynamique présentant des surfaces obliques et/ou à points d'inflexion, ou on conforme avec au moins un point d'inflexion des parois latérales du décrochement et du panneau,
- soit, dans le cas b) :
   -- le décrochement étant sans aucun dit panneau disposé dedans, on y dispose des éléments amovibles de lissage aérodynamique présentant des surfaces obliques et/ou à points d'inflexion, et,
   -- ultérieurement, avant d'y disposer un dit panneau, on en retire les éléments amovibles de lissage aérodynamique puis on y dispose un dit panneau.

Avec de tels éléments amovibles de lissage aérodynamique, on doit pouvoir maximiser le volume disponible pour les panneaux optionnels.

Dans le présent texte, le terme « soit » peut ne pas exclure une combinaison des deux cas : i) et ii).

En termes d'ensemble de gestion acoustique du type précité, il est par ailleurs proposé que :
- soit le décrochement se raccorde à la surface générale environnante dudit support par des parois à points d'inflexion,
- soit :
   -- le décrochement présente des premières parois latérales sensiblement perpendiculaires à la surface générale environnante du support,
   -- le panneau est configuré pour être reçu dans le décrochement et présente des secondes parois latérales sensiblement parallèles aux premières parois latérales, lorsque ledit panneau est reçu dans le logement, et
   -- les éléments amovibles de lissage aérodynamique présentent des surfaces obliques et/ou à points d'inflexion et sont disposés dans ledit décrochement, de façon adjacente aux premières parois latérales,
- soit les éléments amovibles de lissage aérodynamique présentent des surfaces obliques et/ou à points d'inflexion et sont configurés pour pouvoir être disposés dans le décrochement,
- soit le panneau présente une surface, adaptée à être en contact avec l'air en mouvement, qui est bombée vers le centre par rapport à sa périphérie et qui présente périphériquement une pente de raccordement à la surface générale environnante dudit support, quand le panneau est reçu dans le décrochement.

Avec un tel ensemble, et comme noté ci-avant, par exemple dans une configuration classique (panneaux de forme arrondi, typiquement relativement cylindrique, présentant une épaisseur marquée aux extrémités), le fait de supprimer un panneau acoustique fait apparaître une profondeur de décrochement (telle qu'une différence de rayons de paroi) entre l'emplacement du panneau acoustique et la/les parois adjacentes. Ceci peut induire une pénalité aérodynamique significative, croissante avec la différence de rayons observée entre deux parois adjacentes (qui peut être de l'ordre de plusieurs dizaines de mm). On note, par ailleurs que certaines technologies de réduction de bruit peuvent permettre de minimiser l'encombrement nécessaire (matériaux poreux, par exemple). Ainsi, on peut penser que la pénalité aérodynamique associée à une profondeur, qui peut être matérialisée par un écart de section de veine, peut atteindre des niveaux relativement faibles (acceptables vis-à-vis d'un compromis équilibré entre la performance et l'acoustique). L'enjeu de l'encombrement se trouve particulièrement au niveau de l'épaisseur du panneau. Sur un panneau classique, l'épaisseur est conditionnée par la fréquence d'accord (celle à atténuer), donc à la longueur d'onde du signal acoustique. Plus la fréquence est basse, plus la longueur d'onde est élevée, et plus le panneau doit être épais.

Certaines solutions prévoient des cavités dites « foldés » - ou (re)pliées - ou « inclinées » qui s'étendent alors suivants plusieurs directions (radiale + axiale par exemple), de sorte à minimiser l'épaisseur du panneau. Avec des matériaux poreux, c'est plutôt la structure interne du matériau qui ajuste la fréquence d'accord, en permettant de traiter des fréquences basses dans des encombrements réduits par rapport au panneau de type nid d'abeille classique.

Ceci étant, même dans des dimensions faibles, des discontinuités de paroi du support (évolution brutale d'une ligne d'écoulement d'air) peuvent engendrer des perturbations aérodynamiques néfastes. Afin de remédier à ce problème, il est proposé ce qui suit, en solutions alternatives ou complémentaires entre elles :
- par rapport à la surface générale environnante du support, le décrochement est défini par une simple marche, à épaulement unique ;
- le décrochement se raccorde à la surface générale environnante dudit support par des parois à points d'inflexion ;
- le décrochement se raccorde à la surface générale environnante dudit support par des parois à surfaces obliques ;
- le décrochement adapté à recevoir ledit panneau et le panneau adapté à y être reçu ont, en regard, des contours respectifs sensiblement complémentaires.

De façon plus générale, la revendication 2 définit une solution préférée au problème posé ci-avant, dans un tel ensemble de gestion acoustique.

L'invention pourra être encore mieux comprise et d'autres détails, caractéristiques et avantages de l'invention pourraient apparaître à la lecture de la description suivante faite à titre d'exemple non limitatif en référence aux dessins annexés.

### BREVE DESCRIPTION DES FIGURES

- les figures 1 et 2 sont deux coupes axiales (axe X) de deux applications de la solution de l'invention;
- la figure 3 schématise une zone d'un support de nacelle ou de turbomachine d'aéronef où une gestion acoustique comme proposé par l'invention peut s'appliquer ;
- la figure 4 schématise la même zone, panneau enlevé, changé par un autre prêt à être remis à la place du premier, pour ladite gestion acoustique;
- la figure 5 est la coupe axiale V-V de la figure 3 ;
- la figure 6 schématise une réalisation alternative à la figure 4 ;
- les figures 7,8 schématisent des alternatives de la coupe axiale VI-VI de la figure 6 ;
- les figures 9,10,11 schématisent trois alternatives de la coupe axiale V-V, avec des formes de décrochement 34 différentes, de même pour le panneau placé le décrochement ;
- la figure 12 schématise une alternative à la figure 3 ;
- la figure 13 schématise une alternative à la figure 4 ;
- les figures 14,15 schématisent des alternatives de la coupe axiale XIII-XIII de la figure 13 ; et
- la figure 16 schématise un carter de soufflante équipé de panneaux selon l'invention.

### DESCRIPTION DETAILLEE

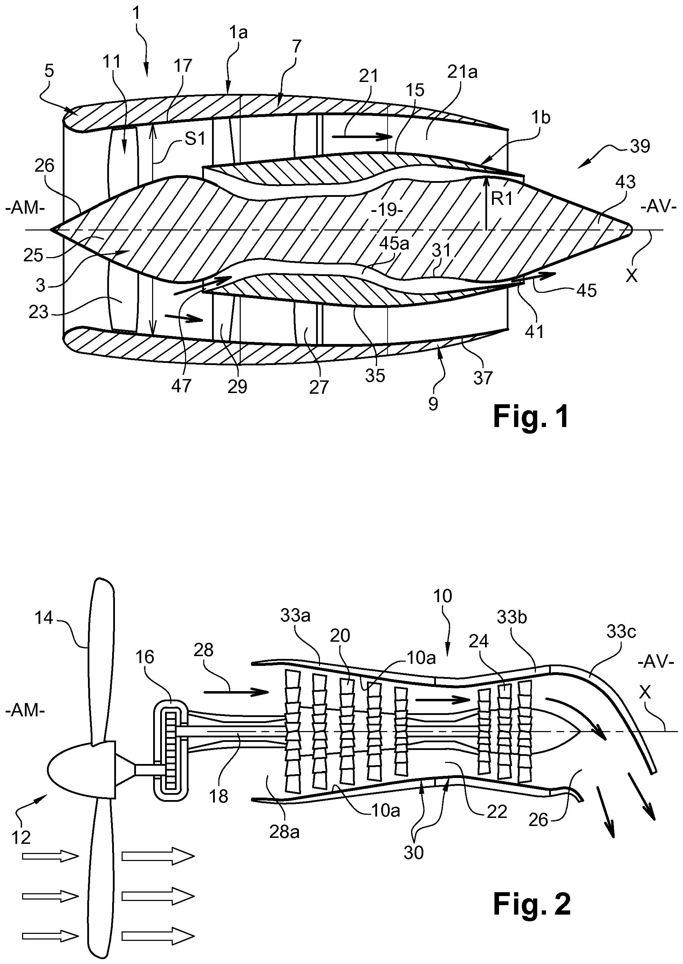

Les figures 1 et 2 schématisent donc deux cas possibles dans lesquels l'invention peut s'appliquer.
Sur la figure1 est schématisé une nacelle 1 d'un turboréacteur d'avion 3 à double flux. La nacelle 1, qui constitue donc un assemblage de support et de capots pour la turbomachine d'aéronef concernée et qui assure sa liaison avec le fuselage de l'aéronef, comprend classiquement une structure externe 1a comportant une section amont 5 (AM) formant entrée d'air, une section médiane 7 et une section aval 9 (AV) pouvant incorporer des moyens d'inversion de poussée. La section amont 5 ou la section médiane 7 présente une paroi interne formée par un carter 17 d'une soufflante 11 du turboréacteur. Dans la présente description le carter 17 de soufflante peut définir le « carter annulaire externe » par ailleurs mentionné. La nacelle 1 comporte par ailleurs une structure interne 1b comprenant (au moins) un carénage 15 du moteur 19 du turboréacteur. La structure externe 1a de la nacelle 1 définit, avec la structure interne 1b, une veine d'air annulaire 21, souvent désignée par « veine d'air secondaire ou froid », par opposition à l'air chaud engendré par le moteur 19, où passe une veine dite primaire.

La soufflante 11 comprend une hélice comportant une pluralité d'aubes 23, montée autour de l'axe de rotation X sur un moyeu 25 monté en rotation par rapport au carter de soufflante 17. En aval de la soufflante 11 se trouvent des aubes de redressement de flux 29 (OGV) permettant de redresser le flux d'air froid engendré par la soufflante 11. Des bras structuraux 27 relient radialement la nacelle 1 à la structure interne 1b. Des IGV peuvent être présents à la manière d'une grille d'aubes localisée dans le flux primaire 45a, en amont du compresseur basse pression. Le moyeu 25 est lié en amont à un cône d'entrée d'air 26 du turboréacteur. La section aval 9 comprend une structure interne fixe 31 (IFS) entourant la partie amont du turboréacteur 3, une structure externe fixe 35 (OFS) et un capot mobile 37 pouvant comporter des moyens d'inversion de poussée. Un mât de suspension (non représenté) supporte le turboréacteur 3 et la nacelle 1. La nacelle 1b se termine à l'aval par une tuyère d'éjection 39 profilée. Les surfaces externe et interne du flux primaire (respectivement définies par le manchon externe de tuyère primaire - ou « primary nozzle sleeve - 41 et le plug 43 - ou « primary nozzle plug ; en français : «embout» ou «embout interne de tuyère primaire ) définissent entre elles la partie aval terminale, de sortie, du canal ou veine 45a d'écoulement du flux d'air primaire 45, dit chaud, sortant du turboréacteur.

Sur la figure 1, on a marqué en gras les surfaces de contact avec l'air en mouvement 21 ou 45 pouvant typiquement être celles d'un panneau 20, comme prévu dans l'invention : panneau acoustique ou panneau non acoustique. Il s'agit de toute la surface interne de la structure externe 1a de la nacelle, du carénage (externe) 15, du cône d'entrée d'air 26 jusqu'à la lèvre 47 d'entrée d'air primaire, de la structure externe fixe 35 et/ou du module interne 43, depuis l'amont de la sortie d'air primaire en extrémité aval du module externe 41.

Sur la figure 2 est schématisée une nacelle 10 d'une autre turbomachine d'aéronef, ici un turbopropulseur 12 d'avion. La nacelle 10 est aussi appelé carénage. Elle comprend une structure 30, externe (dans le sens où elle entoure la veine 28a), comprenant au moins un carter annulaire, ici trois 33a,33b,33c, eux-mêmes donc externes, autour de l'axe X. Le turbopropulseur 12 comprend d'amont en aval, le long de l'axe de rotation X, une hélice 14 (tractrice, placée donc en extrémité amont dans cet exemple), un réducteur 16 en prise avec l'hélice et qui entraine un arbre axial 18 le long duquel s'échelonne un compresseur 20, une chambre de combustion 22 et une turbine 24, en aval de laquelle les gaz sorte par une sortie d'échappement 26. La nacelle 10 s'étend autour de l'axe X depuis l'amont du compresseur 20 jusqu'à l'extrémité aval de la sortie d'échappement 26.

Sur la figure 2, on a aussi marqué en gras les surfaces de contact avec l'air en mouvement 28 qui, via la veine 28a, entre dans le compresseur 20, donc dans la nacelle 10 et qui peuvent typiquement être celles d'un panneau 20, comme prévu dans l'invention : il s'agit de toute la surface interne 10a de la nacelle.

Ces deux exemples indiquent qu'il y a donc certaines zones critiques sur une turbomachine d'aéronef où la réduction de bruit d'une surface exposée à de l'air en mouvement (21,28,45) est spécifiquement pris en compte.

On a compris que la présente invention vise à chercher à affiner la capacité à adapter le niveau de technologie de réduction de bruit d'une telle surface en fonction du besoin des utilisateurs : en fonction de ces besoins, réduire le bruit est utile ou non, nécessaire ou non, requis ou non. Il convient de pouvoir s'adapter aux circonstances.

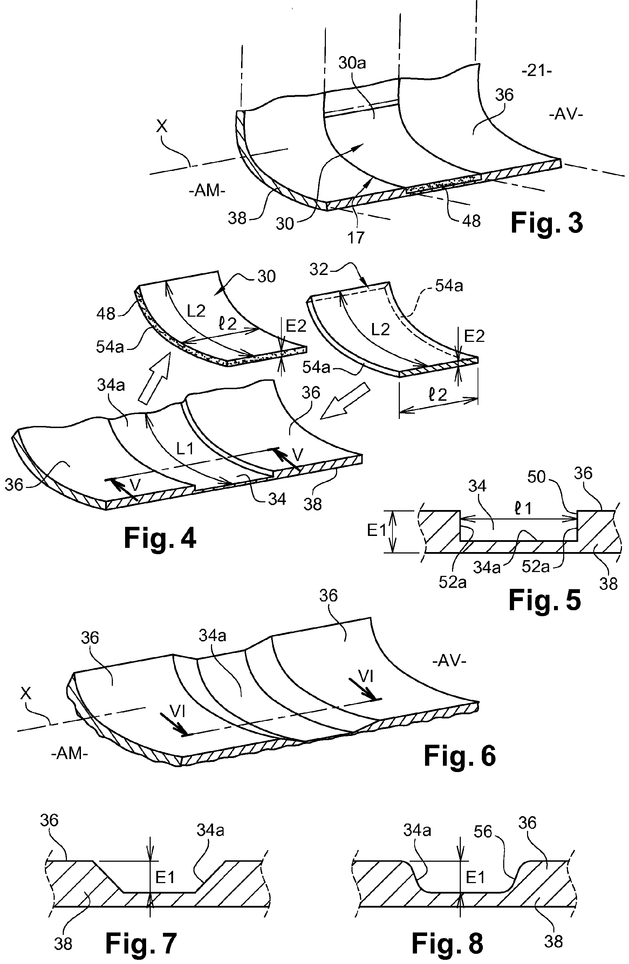

Sur les figures 3 et suivantes on a cherché à illustrer les solutions ici proposées pour offrir une telle adaptation.

D'abord, s'il y a recherche d'une limitation de bruit, c'est par la présence (en soi connue) d'un panneau 30 à caractéristiques acoustiques que cela doit/va se traduire.

Il est précisé qu'un panneau 30 (à caractéristiques) acoustique(s) est un panneau ayant les caractéristiques suivantes :
- le niveau d'atténuation acoustique associé au panneau est supérieur à 1 dB sur au moins une fréquence comprise entre 100 et 10000 Hz,
- et/ou le coefficient d'absorption qui caractérise le panneau est supérieur à 0.1 sur au moins une fréquence comprise entre 100 et 10000 Hz,
- et/ou le taux de surface ouverte au niveau de la paroi en contact avec l'écoulement (POA : Percent Open Area), hors ouvertures dédiées au système d'accrochage, est supérieur à 2.5 % de la surface du panneau.

Mais utiliser un panneau 32 de substitution (à caractéristiques) non acoustique(s) ou, défini positivement, à caractéristiques aérodynamiques pourrait lui être préféré.

Il est précisé qu'un panneau 32 (à caractéristiques) non acoustique(s) ou à caractéristiques aérodynamiques est un panneau ayant les caractéristiques suivantes :
- le niveau d'atténuation acoustique associé au panneau est inférieur à 1 dB sur les fréquences comprises entre 100 et 10000 Hz,
- et/ou le coefficient d'absorption qui caractérise le panneau est inférieur à 0.1 sur les fréquences comprises entre 100 et 10000 Hz,
- et/ou le taux de surface ouverte au niveau de la paroi en contact avec l'écoulement (POA : Percent Open Area), hors ouvertures dédiées au système d'accrochage, est inférieur à 2.5% de la surface du panneau, voire :
   - où la perméabilité des différents matériaux utilisés pour former le panneau 30 de substitution est inférieure à 90%,
   - et/ou dont le diamètre des possibles pores (perforations) visibles à la surface du panneau est inférieur à 0.4 mm,
   - et/ou dont le volume de toute cavité (volumes d'air considéré comme étant fermé si l'on ne tient pas compte des ouvertures communicantes avec l'écoulement à l'intérieur de la veine considérée) dispose d'un volume supérieur à 30 cm3,
   - et/ou qui ne présente aucune cavité (exclusivement interne ou débouchant en surface),
   - et/ou qui ne dispose pas d'une structure en sandwich (superposition de couches de matériaux différents par collage).

Un aspect de l'invention est donc aussi de pouvoir substituer un panneau 32 à caractéristiques non acoustiques à un panneau 30 à caractéristiques acoustiques, et inversement.

Différents structurellement, les deux panneaux 30,32 pourront être identiques, en termes d'encombrement (longueurs, largeurs, épaisseurs...) dès lors qu'ils sont prévus pour être tous deux adaptés pour être disposer dans un décrochement 34 formé en creux par rapport à une surface générale environnante 36 d'un support 38 appartenant à la turbomachine 3,12 ou à sa nacelle 1,10.

Il est précisé qu'un support 38 de panneau 30 ou 32 est une structure de la turbomachine 3,12 ou de sa nacelle présentant une surface de contact avec l'air en mouvement (21,28 ou 45), comme l'est (quand cet air est effectivement en mouvement, donc quand typiquement l'aéronef vole) :
- la surface extérieure, respectivement 30a ou 32a, du panneau 30 ou 32, quand le panneau est disposé dans le décrochement 34,
- et la surface extérieure 34a du décrochement 34, quand aucun panneau 30 ou 32 n'est disposé dans le décrochement.

Ainsi, le support 38 peut être un élément de bâti et/ou comprenant des poutres et lui-même des panneaux, notamment pour définir les surfaces extérieures 30a,32a,34a. Les surfaces extérieures 30a,32a,34a pourront être à dites caractéristiques aérodynamiques, comme pourra de préférence l'être la surface générale environnante 36.

La surface générale environnante 36 est la surface qui est adjacente au décrochement 34. Elle le limite ou le délimite. Les surfaces extérieures 30a,32a,34a devant être en contact avec l'air en mouvement (21,28 ou 45) et étant situées dans une veine de gaz (air ou mélange air/carburant), il s'agira de surfaces de limitation d'une telle veine. Dans les aéronefs, ces surfaces sont bien connues. On sait les identifier et les réaliser. Les surfaces extérieures 30a,32a,34a seront typiquement concaves (limites radialement externes de veine), ou convexes (limites radialement internes de veine). Etant donné que la diffusion du bruit est à gérer a priori dans toutes les directions, placée dans une dite veine, la surface générale environnante 36 pourra typiquement être fermée (présenter un périmètre), s'étendre autour de l'axe X, être annulaire autour de lui, ou parallèlement à cet axe.

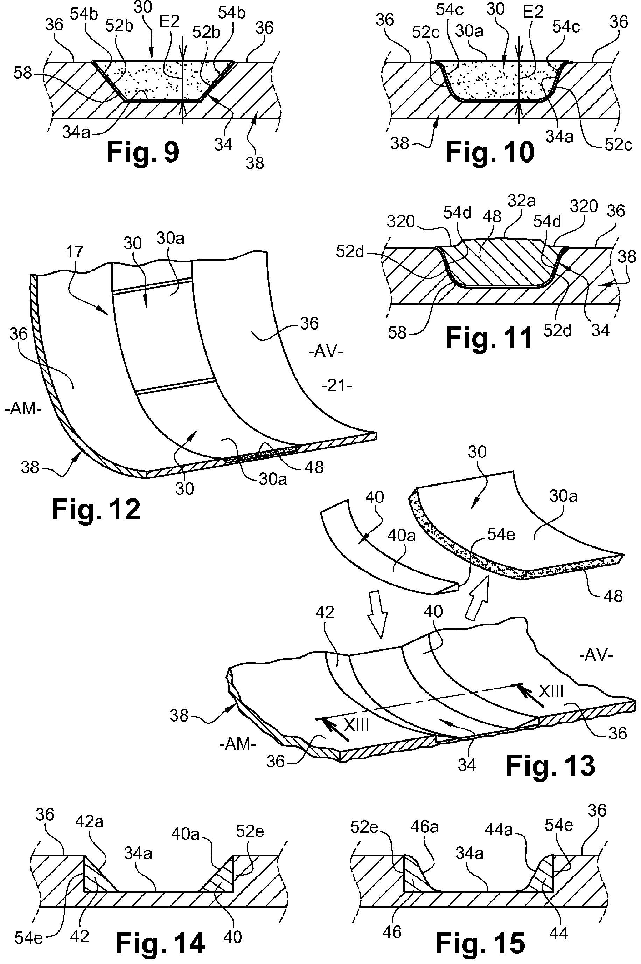

Dès lors que les panneaux 30,32 sont a priori interchangeables et susceptibles d'être ou non présents dans le décrochement 34 prévu pour les recevoir alternativement, de façon amovible, les dimensions respectives du décrochement 34 (longueur L1, largeur l1, profondeur E1, figure 5) et celles correspondantes des panneaux 30,32 (longueur L2, largeur l2, épaisseur E2, figure 4) seront de préférence identiques, aux jeux de mise en place/retrait près, et hors hypothèse d'utilisation d'éléments amovibles de lissage aérodynamique, ou joints, 40-46 ; voir figures 13-15.

Avant de revenir sur de tels joints 40-46, il importe de préciser que c'est donc la procédure suivante qu'il est prévu de suivre à l'endroit de chaque décrochement 34, en fonction d'un critère acoustique ou aérodynamique ; Cinq cas possibles :
a) le décrochement 34 étant sans aucun dit panneau 30,32 disposé dedans, on laisse le décrochement 34 ainsi, sans aucun panneau, comme figures 6-8 par exemple, ou
b) le décrochement 34 étant sans aucun dit panneau 30,32 disposé dedans, on y dispose un dit panneau 30,32, ou
c) un dit panneau 30,32 étant disposé dans le décrochement 34, on retire le panneau et on laisse le décrochement 34 sans aucun dit panneau disposé dedans, comme figure 13 par exemple, ou
d) on laisse le décrochement 34 avec un dit panneau disposé dedans, comme figure 3 par exemple.

Dans un premier mode de réalisation plus particulièrement illustré figures 3-5, il est proposé de concevoir :
- un décrochement 34 permettant de minimiser les pénalités aérodynamiques en l'absence de panneau 30 ou 32,
- ainsi qu'un panneau acoustique 30 dont la forme, y compris l'encombrement, s'adapte au décrochement 34.

A ce sujet, on comprend que, par exemple, dans une veine comme celle 21a (air 21) et sur le carter externe 17, dans une configuration classique (panneaux de forme relativement cylindrique présentant une épaisseur marquée aux extrémités -c'est-à-dire ne s'y affinant pas pour finir en diminuant progressivement d'épaisseur-), le fait de supprimer les panneaux 30 (comme figure 5 ou les traits mixtes marquent une possible continuité annulaire) fait apparaître un écart de profondeur de veine E1 (différence de rayon de parois) entre l'emplacement du panneau acoustique et la surface générale environnante 36. Ceci donne lieu à une pénalité aérodynamique significative, croissante avec la différence de rayons (épaisseur E1) observée entre deux parois adjacentes (de l'ordre de plusieurs dizaines de mm). Or, certaines technologies de réduction de bruit peuvent permettre de minimiser l'encombrement nécessaire (matériaux poreux 48, par exemple, tels des absorbants phoniques : nid d'abeille, matériau poreux, ou autre). Ainsi, la pénalité aérodynamique associée à cet écart E1 de sections de veine (voir section S1 figure 1, perpendiculairement à l'axe X, au niveau du carter de soufflante) peut être réduite/limitée à un niveau relativement faible, acceptable vis-à-vis d'un compromis équilibré entre la performance et l'acoustique.

Ceci étant, même dans des dimensions faibles (épaisseurs/ profondeurs en particulier), les discontinuités de la surface 36 du support (changement brutal de la section S1 dans l'exemple) peuvent engendrer des perturbations aérodynamiques relativement importantes. Afin de remédier à ce problème, il est proposé de conformer le support 38 avec une forme spécifique en amont (AM) et en aval (AV) de la zone 34, et de préférence de la zone dédiée à la fixation amovible du panneau optionnel 30 ou 32.

Ainsi on pourra souhaiter éviter la forme des figures 4,5.

Pourtant, cette conformation présente des atouts :
- par rapport à la surface environnante 36, le décrochement 34, bien visible figure 5, est défini par une simple marche, à épaulement unique 50,
- le décrochement 34 présente des premières parois latérales 52a sensiblement perpendiculaires à la surface environnante 36 du support,
- reçu dans le décrochement 34, le panneau présente des secondes parois latérales 54a sensiblement parallèles aux premières parois latérales, et
- comme dans différentes situations exposées, le décrochement 34 et le panneau 30 ou 32 adapté à y être reçu ont, en regard, des contours respectifs sensiblement complémentaires, ainsi qu'on peut le constater figures 3 et 9-12.

Sur ce dernier aspect, on note en référence aux coupes des figures 3 et 9-11 que les parois latérales (d'épaisseur) des décrochements 34 et des panneaux 30,32 respectifs ont effectivement des contours respectifs sensiblement complémentaires : 52b/54b ; 52c/54c ; 52d/54d.

Globalement, à la différence de la forme abrupte 50 de la figure 5, les formes des autres solutions ci-dessus permettent une transition progressive via de possibles changements de rayons des parois latérales concernées, telles 52c/54c ; 52d/54d, ceci en particulier au niveau des bords axiaux/parois latérales axiales de la surface dédiée à la fixation amovible du panneau 30 ou 32 considéré. Ce sont d'ailleurs ces bords axiaux (amont et aval) que montrent les coupes des différentes figures (9 à 11 notamment). Les autres bords/parois latérales peuvent avoir les mêmes formes que lesdits côtés « axiaux », c'est-à-dire les côtés perpendiculaires à l'axe X.

Les surfaces 52b/54b ; 52c/54c ; 52d/54d sont relativement tangentes aux surfaces 34a,36 à raccorder de sorte à minimiser les angles, et donc minimiser les perturbations aérodynamiques. Ainsi, le dessin de cette surface peut présenter un point d'inflexion, comme dans la solution dont des exemples sont illustrés figures 8,10,11 ; voir repère 56 figure 8 à titre d'exemple. L'étendue axiale de chacune de ces variations de rayon sera avantageusement inférieure au quart de l'étendue axiale (dimension l2 dans l'exemple) du panneau 30,32 optionnel, de sorte à minimiser la perte engendrée sur le volume dédié au panneau (par rapport à la forme abrupte 50 de la figure 5).

Si on souhaite bien éviter une telle forme abrupte, il est alors proposé de considérer ce qui suit, en référence aux figures 6-11.

Au moins à ses extrémités axiales, amont et aval donc, le panneau 30,32 présente une conformation oblique et/ou à point(s) d'inflexion, comme l'est celle de la surface extérieure 34a du décrochement 34 par rapport à la surface générale environnante 36. Et on voit figures 9-11 que ces conformations obliques et/ou à point(s) d'inflexion seront avantageusement sensiblement complémentaires entre elles ; même dimensionnement, voire même point d'inflexion.

Au moins à ses extrémités axiales, amont et aval donc, le rayon correspondant à une possible surface alvéolaire du panneau est sensiblement égal à celui des parois latérales adjacentes du décrochement 34, comme illustré figures 10-11 - Ce rayon (tel R1 figure 1) est défini par la distance entre l'axe X de la turbomachine et la surface du panneau en contact avec l'écoulement fluide de la veine, les alvéoles dans ladite surface étant celles existant dans le cas d'un panneau acoustique de type nid d'abeille -. Dans ce cas, des joints pourraient être mis en place entre ces parois latérales et le panneau 30,32 pour combler les écarts et assurer une continuité de surface aérodynamique au moins aux extrémités axiales du panneau.

En d'autres points, le rayon associé aux parois de surface du panneau peut varier et être légèrement inférieur aux rayons observés aux extrémités axiales, de sorte à augmenter légèrement l'épaisseur du panneau. On comprend alors qu'en diminuant le rayon précité (tel R1 figure 1), sans modifier la position du fond de l'emplacement du panneau 30,32, on augmente l'épaisseur de ce panneau.

L'avantage de ces types de configuration est de minimiser la profondeur E1 en l'absence de panneau, et donc minimiser les pénalités aérodynamiques associées, tout en maximisant l'épaisseur du panneau optionnel 30,32.

Dans un certain mode de réalisation, la surface perforée du panneau peut présenter un rayon inférieur à celui des parois latérales adjacentes du décrochement 34 ; voir figure 11 et rayon R1 figure 1, à titre d'exemple pour l'une de ces surfaces qui peut être alvéolaire. Cette configuration permet d'optimiser la performance du design de la veine considérée, en l'absence de panneau 30,32, pour une efficacité optimisée du panneau, au détriment toutefois d'autres aspect liés à la performance et à l'opérabilité, lorsqu'un panneau est présent.

Si malgré les options d'optimisation précitées un problème d'épaisseur E2 insuffisante de panneau 30,32 demeure, il est illustré à titre d'exemple figure 11 que, reçu dans le décrochement 34, le panneau pourra présenter une surface extérieure 30a ou 32a (figure 11) adaptée à être en contact avec l'air en mouvement, qui est bombée vers le centre par rapport à sa périphérie et qui présente périphériquement une pente 320 de raccordement à la surface générale environnante 36 du support, en venant donc de niveau avec elle.

En liaison avec les figures 12-15, on va maintenant évoquer un cas où l'on souhaite éviter un inconvénient des solutions ci-dessus, comme notamment illustré figures 6-11, à savoir une perte de volume du panneau au niveau de ses extrémités du fait de la réduction progressive de son épaisseur E2. Le mode de réalisation présenté ci-après propose une solution incluant la mise en place des éléments 40-46 amovibles de lissage aérodynamique déjà cités, afin de maximiser le volume du décrochement 34 disponible pour lesdits panneaux 30,32 optionnels. Dans cette configuration, il est proposé :
- que les décrochements 34 présentent des premières parois 52e latérales sensiblement perpendiculaires à la surface générale 36 environnante du support (voir figures 14-15), ceci (au moins) aux extrémités amont et aval,
- et, sans panneau dans les décrochements 34, d'y disposer de tels éléments 40-46 amovibles de façon qu'ils soient individuellement adjacents auxdites premières parois 52e du décrochement correspondant.

Les éléments 40-46 présentent :
- desdites secondes parois latérales 54e sensiblement parallèles aux premières parois latérales 52e, et
- orientées vers l'intérieur du décrochement, des surfaces latérales (en contact donc avec le flux gazeux) qui sont obliques, planes telles celles 40a,42a figure 14, ou avec un ou plusieurs points d'inflexion, comme les surfaces 44a,46a figure 15.

Les éléments 40-46 amovibles forment ainsi des éléments de type joint qui vont lisser les perturbations aérodynamiques dues aux décrochements 34. Ils pourront présenter les caractéristiques suivantes :
- le joint 40-46 se présente sous la forme d'un segment d'anneau (voir figure 13 élément 40 seul) ou d'un anneau (voir figure 13, éléments 40,42 en place dans le décrochement, et non limités) dès lors que, radialement à l'axe X, une veine est limitée par une surface annulaire concave (limitation extérieure) ou convexe (limitation intérieure). Dans le cas où il s'agit d'un segment d'anneau, les joints peuvent être mis bout-à-bout circonférentiellement, jusqu'à former un anneau complet. Ceci est transposable au(x) panneau(x) 30 ou 32 : anneau ou secteurs d'anneau bout à bout, autour de l'axe X.
- l'encombrement radial (à l'axe X) associé à la section du/de chaque élément 40,42 est égal sensiblement à la différence de rayon entre la surface dédiée à l'intégration du panneau optionnel et le fond du décrochement 34,
- l'encombrement axial associé à la section du/ de chaque élément 40,42 est inférieur à 50% de l'étendue axiale de la surface du décrochement 34 dédiée à l'intégration du panneau,
- la surface du/ de chaque élément 40,42, en contact avec l'écoulement fluide (21,28 ou 45), permet une transition progressive du rayon de la surface 36 amont vers le rayon de cette même surface, en aval. Préférentiellement, cette surface est relativement tangente aux surfaces des parois latérales à raccorder, de sorte à minimiser les perturbations aérodynamiques. Ainsi, le dessin de cette surface peut présenter un point d'inflexion, comme déjà présenté (cf. figures 8,10,11 et leurs explications),
- à ses extrémités amont et aval, le/chaque élément 40,42 peut être collé sur les parois 54e à raccorder, de sorte à éviter tout endommagement (arrachement) causé par des efforts aérodynamiques à l'intérieur de la veine,
- le/chaque élément 40,42 peut couvrir les éléments de fixation des panneaux 30,32 optionnels, de sorte à éviter une opération de montage supplémentaire pour la dissimulation de ces éléments,
- les éléments de fixation pour lesdits panneaux optionnels peuvent être utilisés comme éléments de fixation du/de chaque élément 40,42.

Concernant la fixation amovible des panneaux 30,32, on pourra prévoir comme élément(s) de fixation, appelés aussi éléments de liaison amovible, un collage ou des fixations vissés dévissables, ou encore des alésages taraudés dans le support (le tout dans le décrochement 34 notamment), par exemple, de sorte à éviter une opération de montage supplémentaire pour la dissimulation de ces éléments. Figures 9,11, on a repéré 58 ces éléments de liaison amovible, ici définis par exemple par une colle. En tant qu'éléments 58 de fixation/liaison amovible permettant de fixer le panneau à son support (carter, autre partie de turbomachine ou de nacelle...), on pourrait prévoir des extrusions de matière pourvues d'orifices appropriés pour assurer des liaisons boulonnées (démontable) ou des extrusions de matière pourvues de surfaces de contact permettant de coller la pièce directement sur son support, ou encore des entretoises alignées avec des taraudages du support du panneau pour assurer un serrage par vis et une butée sur le support. Le panneau peut aussi être muni d'autres extrusions de matière servant de butée afin de faciliter le bon positionnement du panneau à son emplacement sur le support.

Tout ce qui précède pourra bien sûr être mis en oeuvre pour améliorer la performance acoustique d'une turbomachine déjà en service.

Ainsi, par exemple, lors du montage d'un moteur 3,12 et/ou de sa nacelle, des éléments 40,42 de lissage aérodynamique pourraient être positionnés au niveau des extrémités amont et aval de la surface 34 dédiée au panneau optionnel, sur un carter de soufflante ou une nacelle, par exemple.

Pour la maintenance courante, ces éléments 40,42 pourront être démontés et réparés, ou démontés et remplacés par des pièces neuves

A la demande par exemple d'un utilisateur, les éléments 40,42 pourront être supprimés pour être remplacés par des panneaux 30, ou plus probablement 32, afin alors de réduire le niveau de bruit de la turbomachine.

A l'inverse, à tout moment lors d'une maintenance, en particulier dans le cas où un panneau 30 ou 32 serait endommagé, par exemple un utilisateur pourrait demander son remplacement par un panneau de substitution 30 ou 32 pour réduire le coût associé à la maintenance de son moteur.

Dans ce qui précède on a supposé que dans un décrochement 34 pouvait venir se loger un seul dit panneau 30,32. En fait l'expression « un panneau » (30,32) inclus le fait que ce (au moins) un panneau peut être formé de plusieurs sous-panneaux qui, ensemble, occupent l'espace du décrochement 34, une fois disposés dedans.

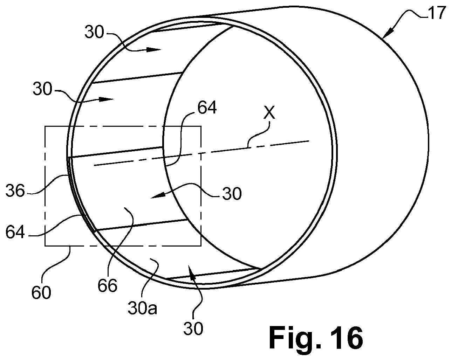

Sur la figure 16, on a cherché à montrer un exemple de zone 60 d'un support, ou structure support, d'une turbomachine ou d'une nacelle d'aéronef, ici un carter 17 annulaire de soufflante dont la paroi(surface) interne est essentiellement formée d'une succession circonférentielle de secteurs définis par les panneaux 30 et/ou 32, s'ils sont présents, sinon de décrochements 34. Il peut s'agir de la même zone que figures 3,4,6,12,13, ou de toute zone contenant l'une au moins des surfaces 10a,15, 26,35,43 marquée en gras figure 1 ou 2. On y retrouve les panneaux 30 et/ou 32, ici ceux 30 qui, sectorisés, forment ensemble la surface interne concave du carter 17.

## Revendications

1. Procédé de préparation d'une zone d'un support et de gestion acoustique :
- sur une turbomachine (3,12) d'aéronef comprenant un cône d'entrée d'air (26), et/ou
- sur une nacelle (1,10) d'une telle turbomachine (3,12) comprenant :
-- au moins une structure externe (1a) comprenant au moins un carter annulaire externe (17), et possiblement :
-- une structure interne (1b) comprenant un carénage (15) de moteur (3,12,19) de turboréacteur (3), lequel moteur (3,12,19) de turboréacteur (3) à cône d'entrée d'air (26) comprend une soufflante (11), la structure interne de la nacelle (1b) définissant alors, avec la structure externe (1a), une veine (21) annulaire d'air secondaire, et
-- une tuyère d'éjection (39) comprenant un manchon externe de tuyère primaire (41) et un embout interne de tuyère primaire (43) définissant entre eux un canal de sortie d'un flux d'air primaire (45) sortant du moteur (3,12,19) du turboréacteur (3),
dans lequel procédé :
- sur au moins ladite zone du support de la turbomachine (3,12) ou de la nacelle (1,10) est réservé au moins un décrochement (34) en creux par rapport à une surface générale environnante dudit support (112) définissant une surface de contact avec l'air en mouvement (21,28,45) :
-- dans la turbomachine (3,12), sur le cône d'entrée d'air (26), ou
-- sur la nacelle (1,10),
le décrochement (34) étant adapté à recevoir de façon amovible au moins un panneau (30) acoustique ou un panneau (32) non acoustique présentant une surface de contact avec l'air en mouvement, et,
- en fonction d'un critère acoustique ou aérodynamique :
-- a) on laisse le décrochement (34) sans aucun dit panneau (30,32) disposé dedans, ou
-- b) le décrochement (34) étant sans aucun dit panneau (30,32) disposé dedans, on y dispose un dit panneau (30,32), ou
-- c) un dit panneau (30,32) étant disposé dans le décrochement (34), on retire le panneau et on laisse le décrochement (34) sans aucun dit panneau disposé dedans,
**caractérisé en ce que** :
- soit, dans le cas a) ou c), on dispose dans le décrochement (34) des éléments (40,42) amovibles de lissage aérodynamique présentant des surfaces obliques (40a,42a) et/ou à points d'inflexion (44a,46a), ou on conforme avec au moins un point d'inflexion des parois latérales du décrochement (34) et du panneau,
- soit, dans le cas b) :
-- le décrochement (34) étant sans aucun dit panneau (30,32) disposé dedans, on y dispose des éléments amovibles de lissage aérodynamique présentant des surfaces obliques et/ou à points d'inflexion, et,
-- ultérieurement, avant d'y disposer un dit panneau (30,32), on en retire les éléments (40,42) amovibles de lissage aérodynamique puis on y dispose un dit panneau (30,32).

2. Ensemble de gestion acoustique, comprenant :
- un panneau acoustique (30) ou un panneau non acoustique (32), et
- un support où est définie une zone, ledit support configuré pour être situé :
-- sur une turbomachine (3,12) d'aéronef comprenant un cône d'entrée d'air (26), et/ou
-- sur une nacelle (1,10) d'une telle turbomachine (3,12) comprenant :
--- une structure externe (1a,30a) comprenant un carter annulaire externe (17,30a...), et possiblement :
--- une structure interne (1b) comprenant un carénage (15) de moteur (3,12,19) de turboréacteur (3), lequel moteur (3,12,19) de turboréacteur comprend une soufflante (11,17) comprenant ledit cône d'entrée d'air (26), la structure interne (1b) de la nacelle (1,10) définissant alors, avec la structure externe (1a), une veine d'air annulaire (21a) d'air secondaire, et
--- une tuyère d'éjection (39) comprenant un manchon externe de tuyère primaire (41) et un embout interne de tuyère primaire (43) définissant entre eux un canal de sortie d'un flux d'air primaire (45) sortant du moteur du turboréacteur (3),
sur ladite zone du support de la turbomachine (3,12) ou de la nacelle (1,10) étant réservé un décrochement (34) en creux par rapport à une surface générale (36) environnante dudit support (38) définissant une surface de contact avec l'air en mouvement (21,28,45) :
-- dans la turbomachine (3,12), sur le cône d'entrée d'air (26), ou
-- sur la nacelle (1,10),
le décrochement (34) étant adapté à recevoir ledit panneau (30,32), lequel présente une surface (30a,32a) de contact avec l'air en mouvement (21,28,45),
le support (38) et/ou ledit panneau (20,30,32) comprenant des éléments (58) de liaison amovible pour, dans le décrochement (34), monter ledit panneau de façon amovible par rapport au support,
**caractérisé en ce que** :
- soit le décrochement (34) se raccorde à la surface générale environnante dudit support par des parois à points d'inflexion,
- soit :
-- le décrochement (34) présente des premières parois latérales sensiblement perpendiculaires à la surface générale environnante du support,
-- le panneau (30,32) est configuré pour être reçu dans le décrochement (34) et présente des secondes parois latérales sensiblement parallèles aux premières parois latérales, lorsque ledit panneau est reçu dans le logement, et
-- les éléments (40,42) amovibles de lissage aérodynamique présentent des surfaces obliques et/ou à points d'inflexion et sont disposés dans ledit décrochement (34), de façon adjacente aux premières parois latérales,
- soit les éléments (40,42) amovibles de lissage aérodynamique présentent des surfaces obliques et/ou à points d'inflexion et sont configurés pour pouvoir être disposés dans le décrochement (34),
- soit le panneau (30,32) présente une surface adaptée à être en contact avec l'air en mouvement (21 ,28,45) qui est bombée vers le centre par rapport à sa périphérie et qui présente périphériquement une pente de raccordement à la surface générale environnante dudit support, quand le panneau est reçu dans le décrochement (34).

3. Ensemble selon la revendication 2, dans lequel le décrochement (34) se raccorde à la surface générale environnante dudit support par des parois à surfaces obliques.

4. Ensemble selon la revendication 2 ou 3, dans lequel le décrochement (34) adapté à recevoir ledit panneau (30,32) et le panneau adapté à y être reçu ont, en regard, des contours respectifs sensiblement complémentaires.

## Patentansprüche

1. Verfahren zum Herstellen eines Bereichs eines Trägers und zum Akustikmanagement
- an einem Turbotriebwerk (3, 12) eines Luftfahrzeugs, das einen Lufteintrittskonus (26) aufweist, und/oder
- an einer Gondel (1, 10) eines solchen Turbotriebwerks (3, 12), enthaltend:
-- zumindest eine Außenstruktur (1a), die zumindest ein äußeres ringförmiges Gehäuse (17) enthält, und gegebenenfalls
-- eine Innenstruktur (1b), die eine Verkleidung (15) eines Motors (3, 12, 19) eines Turbostrahltriebwerks (3) enthält, wobei der Motor (3, 12, 19) des Turbostrahltriebwerks (3) mit Lufteintrittskonus (26) ein Gebläse (11) enthält, wobei die Innenstruktur der Gondel (1b) dann mit der Außenstruktur (1a) einen ringförmigen Luftströmungskanal (21) für Sekundärluft definiert, und
-- eine Schubdüse (39) mit einer äußeren Primärdüsenhülse (41) und einer inneren Primärdüsenspitze (43), die zwischen sich einen Austrittskanal für einen Primärluftstrom (45) definieren, der aus dem Motor (3, 12, 19) des Turbostrahltriebwerks (3) austritt,
wobei bei dem Verfahren
- an zumindest dem genannten Bereich des Trägers des Turbotriebwerks (3, 12) oder der Gondel (1, 10) zumindest eine Aussparung (34) freigehalten wird, die in Bezug auf eine umgebende Hauptfläche des Trägers (112) vertieft ist und eine Kontaktfläche mit der strömenden Luft (21, 28, 45) definiert, und zwar
-- in dem Turbotriebwerk (3, 12), am Lufteinlasskonus (26), oder
-- an der Gondel (1, 10),
wobei die Aussparung (34) dazu geeignet ist, zumindest eine akustische Platte (30) oder eine nicht-akustische Platte (32), die jeweils eine Kontaktfläche mit der strömenden Luft aufweisen, abnehmbar aufzunehmen, und
- in Abhängigkeit von einem akustischen oder aerodynamischen Kriterium
-- a) die Aussparung (34) ohne eine darin angeordnete Platte (30, 32) belassen wird, oder
-- b) wenn die Aussparung (34) keine darin angeordnete Platte (30, 32) hat, eine Platte (30, 32) darin angeordnet wird, oder
-- c) wenn eine Platte (30, 32) in der Aussparung (34) angeordnet ist, die Platte entfernt wird und die Aussparung (34) ohne eine darin angeordnete Platte belassen wird,
**dadurch gekennzeichnet, dass**
- entweder im Fall a) oder c) in der Aussparung (34) abnehmbare aerodynamische Glättungselemente (40, 42) mit schrägen Flächen (40a, 42a) und/oder mit Knickpunkten (44a, 46a) angeordnet werden, oder Seitenwände der Aussparung (34) und der Platte mit zumindest einem Knickpunkt ausgebildet werden,
- oder, im Fall b)
-- wenn die Aussparung (34) keine darin angeordnete Platte (30, 32) hat, abnehmbare aerodynamische Glättungselemente mit schrägen Flächen und/oder Knickpunkten darin angeordnet werden, und
-- nachträglich vor dem Anordnen einer Platte (30, 32) die abnehmbaren aerodynamischen Glättungselemente (40, 42) entfernt werden und dann eine Platte (30, 32) darin angeordnet wird.

2. Anordnung zum Akustikmanagement, enthaltend:
- eine akustische Platte (30) oder eine nicht akustische Platte (32) und
- einen Träger, an dem ein Bereich definiert ist, wobei der Träger ausgelegt ist zum Anordnen
-- an einem Turbotriebwerk (3, 12) eines Luftfahrzeugs, das einen Lufteinlasskonus (26) aufweist, und/oder
-- an einer Gondel (1, 10) eines solchen Turbotriebwerks (3, 12), enthaltend:
--- eine Außenstruktur (1a, 30a), die ein äußeres ringförmiges Gehäuse (17, 30a ...) enthält, und gegebenenfalls
--- eine Innenstruktur (1b), die eine Verkleidung (15) eines Motors (3, 12, 19) eines Turbostrahltriebwerks (3) enthält, wobei der Motor (3, 12, 19) des Turbostrahltriebwerks ein Gebläse (11, 17) enthält, das den Lufteintrittskonus (26) aufweist, wobei die Innenstruktur (1b) der Gondel (1, 10) dann mit der Außenstruktur (1a) einen ringförmigen Luftströmungskanal (21a) für Sekundärluft definiert, und
--- eine Schubdüse (39) mit einer äußeren Primärdüsenhülse (41) und einer inneren Primärdüsenspitze (43), die zwischen sich einen Austrittskanal für einen Primärluftstrom (45) definieren, der aus dem Motor des Turbotriebwerks (3) austritt,
wobei an dem genannten Bereich des Trägers des Turbotriebwerks (3, 12) oder der Gondel (1, 10) eine Aussparung (34) freigehalten ist, die in Bezug auf eine umgebende Hauptfläche (36) des Trägers (38) vertieft ist und eine Kontaktfläche mit der strömenden Luft (21, 28, 45) definiert, und zwar
-- in dem Turbotriebwerk (3, 12), am Lufteinlasskonus (26), oder
-- an der Gondel (1, 10),
wobei die Aussparung (34) dazu geeignet ist, die erste Platte (30, 32) aufzunehmen, die eine Kontaktfläche (30a, 32a) mit der strömenden Luft (21, 28, 45) aufweist,
wobei der Träger (38) und/oder die Platte (20, 30, 32) lösbare Verbindungselemente (58) enthalten, um die Platte in Bezug auf den Träger lösbar in der Aussparung (34) zu befestigen,
**dadurch gekennzeichnet, dass**
- entweder die Aussparung (34) sich über Wände mit Knickpunkten an die umgebende Hauptfläche des Trägers anschließt,
- oder
-- die Aussparung (34) erste Seitenwände aufweist, die im Wesentlichen senkrecht zur umgebenden Hauptfläche des Trägers verlaufen,
-- die Platte (30, 32) dazu ausgelegt ist, in der Aussparung (34) aufgenommen zu werden, und zweite Seitenwände aufweist, die im Wesentlichen parallel zu den ersten Seitenwänden verlaufen, wenn die Platte in der Aufnahme aufgenommen ist, und
-- die abnehmbaren aerodynamischen Glättungselemente (40, 42) schräge Flächen (40a, 42a) und/oder Knickpunkte aufweisen und angrenzend an den ersten Seitenwänden in der Aussparung (34) angeordnet sind,
- oder die abnehmbaren aerodynamischen Glättungselemente (40, 42) schräge Flächen (40a, 42a) und/oder Knickpunkte aufweisen und dazu ausgelegt sind, in der Aussparung (34) angeordnet werden zu können,
- oder die Platte (30, 32) eine Fläche aufweist, die dazu ausgelegt ist, mit der strömenden Luft (21, 28, 45) in Kontakt zu stehen, und bezüglich ihres Umfangs zur Mitte hin gewölbt ist und am Umfang eine Neigung aufweist, um sich an die umgebende Hauptfläche des Trägers anzuschließen, wenn die Platte in der Aussparung (34) aufgenommen ist.

3. Anordnung nach Anspruch 2,
wobei die Aussparung (34) sich über Wände mit schrägen Flächen an die umgebende Hauptfläche des Trägers anschließt.

4. Anordnung nach Anspruch 2 oder 3,
wobei die Aussparung (34) zum Aufnehmen der Platte (30, 32) und die Platte, die darin aufgenommen werden soll, jeweils einander gegenüberliegende Konturen haben, die im Wesentlichen komplementär ausgebildet sind.

## Claims

1. A method for preparing a support area and for an acoustic management:
- on an aircraft turbomachine (3,12) comprising an air inlet cone (26), and/or
- on a nacelle (1,10) of such a turbomachine (3,12) comprising:
-- at least one outer structure (1a) comprising at least one outer annular casing (17), and possibly:
-- an inner structure (1b) comprising a fairing (15) of a turbojet (3) engine (3,12,19), which engine (3,12,19) of a turbojet (3) with an air inlet cone (26) comprises a fan (11), the inner structure of the nacelle (1b) then defining, with the outer structure (1a), an annular air vein (21) of secondary air, and
-- an exhaust nozzle (39) comprising an outer primary nozzle sleeve (41) and an inner primary nozzle tip (43) defining between them an outlet channel for a primary air flow (45) exciting the engine (3,12,19) of the turbojet (3),
in which method:
- on at least the said support area of the turbomachine (3,12) or of the nacelle (1,10) is reserved at least one recess (34) recessed with respect to a surrounding general surface of the said support (112) defining a surface for contact with the moving air (21,28,45):
-- in the turbomachine (3,12), on the air inlet cone (26), or
-- on the nacelle (1,10),
the recess (34) being adapted to removably receive at least one acoustic panel (30) or non-acoustic panel (32) having a surface for contact with moving air, and,
- depending on an acoustic or an aerodynamic criterion:
-- a) the recess (34) is left without any panel (30,32) placed therein, or
-- b) the recess (34) being without any said panel (30,32) placed therein, a said panel (30,32) is placed therein, or
-- c) with a said panel (30,32) placed in the recess (34), the panel is removed and the recess (34) is left free of any of said panel placed therein,
**characterized in that**:
either, in case a) or c), removable aerodynamic smoothing elements (40,42) having oblique (40a,42a) and/or inflection-point surfaces (44a,46a) are placed in the recess (34), or the side walls of the recess (34) and of the panel are shaped with at least one inflection point,
- or, in case b):
-- the recess (34) being free of any said panel (30,32) placed therein, removable aerodynamic smoothing elements having oblique and/or inflection point surfaces are placed therein, and,
-- subsequently, before placing a said panel (30,32) therein, the removable aerodynamic smoothing elements are removed and then a said panel (30,32) is placed therein.

2. An acoustic management assembly, comprising:
- an acoustic panel (30) or a non-acoustic panel (32),
- a support defining an area, said support being configured to be located:
-- on an aircraft turbomachine (3,12) comprising an air inlet cone (26), and/or
-- on a nacelle (1,10) of such a turbomachine (3,12) comprising:
--- at least one outer structure (1a,30a) comprising at least one outer annular casing (17,30a...), and possibly:
--- an inner structure (1b) comprising a fairing (15) of a turbojet (3) engine (3,12,19), which engine (3,12,19) comprises a fan (11,17) comprising the said air inlet cone (26), the inner structure (1b) of the nacelle (1,10) then defining, with the outer structure (1a), an annular air vein (21a) of secondary air, and
--- an exhaust nozzle (39) comprising an outer primary nozzle sleeve (41) and an inner primary nozzle tip (43) defining between them an outlet channel for a primary air flow (45) exciting the turbojet (3) engine,
on the said area of the support of the turbomachine (3,12) or of the nacelle (1,10) being reserved at least one recess (34), recessed with respect to a surrounding general surface (36) of the said support (38) defining a surface for contact with the moving air (21,28,45):
-- in the turbomachine (3,12), on the air inlet cone (26), or
-- on the nacelle (1,10),
the recess (34) being adapted to receive said panel (30,32), which has a surface (30a,32a) for contact with the moving air (21,28,45),
the support (38) and/or said panel (20,30,32) comprising removable connecting elements (58) for, in the recess (34), mounting said panel removably with respect to the support,
**characterized in that**:
- either the recess (34) is linked with the surrounding general surface of said support by walls having inflection points,
- or:
-- the recess (34) has first side walls substantially perpendicular to the surrounding general surface of the support,
-- the panel is configured to be received in the recess (34) and has second side walls substantially parallel to the first side walls, when said panel is received in the recess, and
-- the removable aerodynamic smoothing elements (40,42) have oblique and/or inflection point surfaces are placed in said recess (34) adjacent to the first side walls,
- or the removable aerodynamic smoothing elements (40,42) have oblique and/or inflection-point surfaces and are configured to be placed in the recess (34),
- or the panel (30,32) has a surface adapted for contact with the moving air (21,28,45) which is curved towards the centre with respect to its periphery and has a peripheral slope for joining the general surrounding surface of said support, when the panel is received in the recess (34).

3. Assembly according to claim 2, in which the recess (34) is linked with the surrounding general surface of the said support by oblique surface walls.

4. Assembly according to claim 2 or 3, in which the recess (34) adapted to receive said panel (30,32) and the panel adapted to be received therein have, facing each other, substantially complementary respective contours.
